# FASCICULE DE BREVET EUROPEEN

(11) **EP 3 094 829 B1**
(45) Date de publication et mention de la délivrance du brevet: **13.11.2019**
(21) Numéro de dépôt: 15705631.8
(22) Date de dépôt: 15.01.2015
(51) Int. Cl.: F01D 25/18, F02C 7/06, F02C 7/32, F16H 57/04

(54) **BOÎTIER D'ENTRAÎNEMENT POUR ÉQUIPEMENTS**
HILFSGETRIEBE
ACCESSORY GEARBOX

(30) Priorité: 16.01.2014 FR 1450342
(43) Date de publication de la demande: 23.11.2016
(73) Titulaire: Safran Transmission Systems, 92700 Colombes (FR)
(72) Inventeur: VIEL, Julien, F-95100 Argenteuil (FR); PELTIER, Jordane, F-75003 Paris (FR); PRUNERA-USACH, Stéphane, F-92500 Rueil Malmaison (FR)
(74) Mandataire: Brevalex
(86) Numéro de dépôt international: PCT/FR2015/050092
(87) Numéro de publication internationale: WO 2015/107300

(56) Documents cités:
- WO-A1-87/04222
- FR-A1- 2 941 744
- US-A- 2 978 869
- US-A1- 2009 290 976
- US-A1- 2010 242 496

## Description

### DOMAINE TECHNIQUE

La présente invention se rapporte à des boîtiers d'entraînement pour équipements (en anglais AGB ou Accessory Gearbox) présents dans les turbomachines d'aéronefs.

De tels AGB comportent généralement une ligne d'engrenages permettant de transmettre de l'énergie mécanique entre des organes moteurs, par exemple un démarreur ou un compresseur, et des organes esclaves comme un générateur électrique ou une pompe hydraulique ou d'autres équipements.

Le terme ligne d'engrenages est à comprendre ici comme un ensemble de pignons adjacents engrenés et situés dans un même plan ou dans des plans parallèles.

Plus précisément, l'invention porte sur une structure d'AGB intégrable dans un turboréacteur à double flux.

### ÉTAT DE LA TECHNIQUE ANTÉRIEURE

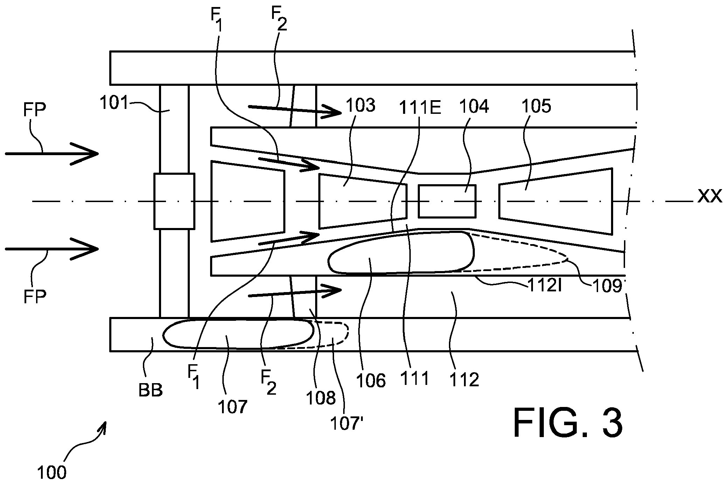

Un turboréacteur double flux 100 s'étendant selon un axe longitudinal XX (figure 3) comporte une veine primaire 111 dans laquelle circule un flux primaire F1 amené à traverser un ensemble de compresseurs 103, une chambre de combustion 104 puis un ensemble de turbine 105. Le turboréacteur 100 comporte aussi une veine secondaire 112 disposée autour de la veine primaire 111 et dans laquelle circule un flux secondaire F2.

L'architecture d'AGB la plus répandue est un AGB en forme de banane ou de croissant, disposé dans la nacelle située autour de la veine secondaire. Un tel AGB s'étend alors axialement dans une zone 107 appelée zone soufflante (en anglais « zone fan ») située entre la soufflante 101 (en anglais fan) et un redresseur secondaire 108 s'étendant dans cette veine. La zone soufflante peut également s'étendre au-delà des redresseurs, tel que cela a été schématisé dans la zone 107'. Au moins un des bras radiaux du redresseur secondaire 108 est creux et est traversé en son cœur par un arbre de transfert de mouvement, appelé arbre radial, et des systèmes de canalisations pouvant lier les équipements AGB à d'autres équipements disposés dans une autre zone 106 de la turbomachine appelée zone centrale (en anglais « zone core »). La zone core 106 est l'espace situé entre la paroi externe 111E de la veine primaire 111 et la paroi interne 112I de la veine secondaire 112, par exemple autour du compresseur haute pression 103 et de la chambre de combustion 104.

Des architectures alternatives d'AGB existent comme des AGB en forme de V. Ceux-ci comportent deux lignes d'engrenages disposées à un angle l'une par rapport à l'autre, c'est-à-dire dont les plans d'orientation du ou des pignon(s) respectif(s) sont sécants. De telles architectures peuvent être disposées dans la zone core 106.

### EXPOSÉ DE L'INVENTION

L'objet de l'invention est une architecture améliorée d'AGB en forme de V.

L'invention porte ainsi sur un boîtier d'entraînement pour équipements de turbomachine comportant une enveloppe et deux lignes d'engrenages disposées en V, l'enveloppe comportant deux branches dans chacune desquelles l'une des deux lignes d'engrenages est disposée, un réservoir de lubrifiant étant disposé entre les deux lignes d'engrenages, l'enveloppe étant un premier carter, et le réservoir de lubrifiant étant un deuxième carter monté dans le premier carter.

L'invention permet ainsi de déporter le réservoir depuis la zone soufflante vers la zone core située entre la veine primaire et la veine secondaire. De l'espace est libéré dans la zone soufflante, ce qui permet d'augmenter le diamètre de la soufflante et les performances moteur.

De plus, dans le cas d'une AGB dite de core, c'est-à-dire disposée dans la zone core, le réservoir est rapproché des équipements utilisateurs de lubrifiant. Les longueurs de canalisations de lubrification s'en trouvent réduites et l'architecture générale du système de lubrification s'en trouve simplifiée.

L'invention permet en outre de mettre à profit l'espace disponible entre les deux branches de l'AGB comportant chacun au moins un équipement, les deux branches étant disposées en V l'une par rapport à l'autre. L'invention permet donc d'améliorer l'intégration du réservoir.

Avantageusement, le réservoir de lubrifiant est intégré dans l'enveloppe.

Dans une configuration avantageuse alternative, l'enveloppe est une pièce de fonderie.

Dans une autre configuration avantageuse, l'enveloppe est une pièce produite par fabrication additive.

Le réservoir peut être une cavité ménagée dans l'enveloppe.

Le réservoir de lubrifiant peut former un réservoir principal de lubrifiant pour l'AGB ou n'être qu'un réservoir auxiliaire ou secondaire, par exemple comme sous-partie d'un volume total de réservoirs de lubrifiant, par exemple pour une utilisation comme réservoir secondaire utilisé uniquement en cas de mode dégradé. Les modes dégradés sont par exemple des situations post incident de type fonctionnement en moulinet (en anglais « windmilling ») sans huile, lorsque la soufflante tourne à vitesse réduite, ne permettant pas au groupe de lubrification principal d'alimenter correctement le système d'huile. On parle de sous-lubrification. Le réservoir secondaire peut alors être utilisé pour une durée limitée, couplé à un système permettant d'alimenter à faible débit les organes de transmission.

L'invention porte encore sur une turbomachine comportant un boîtier d'entraînement pour équipements tel que décrit ci-dessus et disposé dans la zone centrale (c'est-à-dire la « zone core »), situé entre une veine primaire et une veine secondaire de la turbomachine.

Alternativement, l'invention porte sur une turbomachine comportant un boîtier d'entraînement pour équipements tel que décrit ci-dessus et disposé dans la zone soufflante.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures annexées, schématiques et partielles, dans lesquelles :
-- la figure 1 est une vue en perspective d'un boîtier d'entraînement pour équipements selon l'invention ;
-- la figure 2 est une section transversale du boîtier d'entraînement pour équipements de la figure 1 ; et,
-- la figure 3 est une vue générale d'un turboréacteur double flux dans lequel le boîtier d'entraînement pour équipements selon l'invention peut être implémenté.

### EXPOSÉ DÉTAILLÉ DE MODES DE RÉALISATION PARTICULIERS

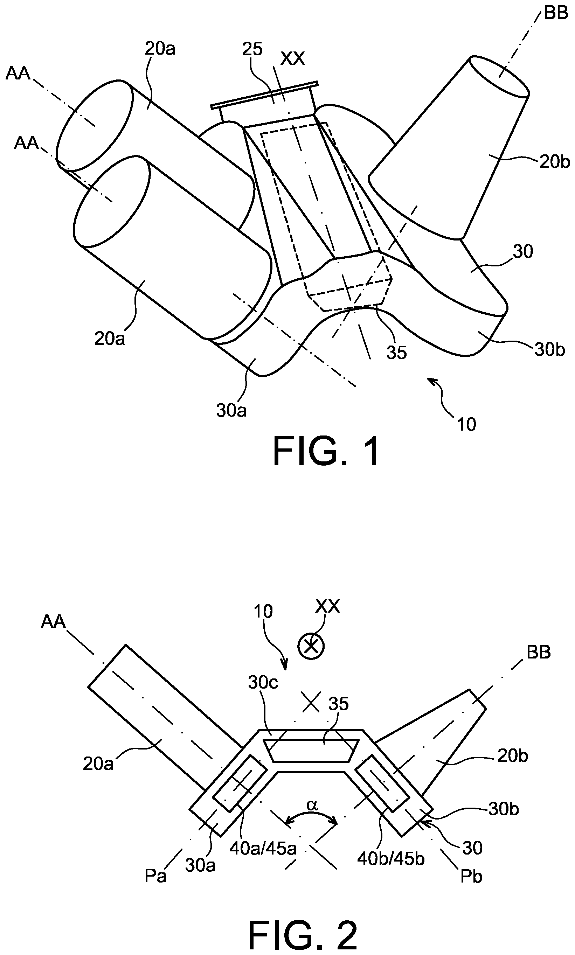

Les figures 1 et 2 illustrent un boîtier d'équipements 10 selon l'invention prévu par exemple pour un turboréacteur à double flux tel que le turboréacteur 100 (figure 3). Le boîtier d'entraînement pour équipements 10 est ici disposé dans la « zone core » 106 de la turbomachine telle que définie en préambule, ici sous l'axe longitudinal XX de la turbomachine (figures 2 et 3). Alternativement, le boîtier d'entraînement 10 est disposé au-dessus ou sur le côté de l'axe XX (variante non représentée). Alternativement encore, le boîtier d'entraînement 10 est disposé dans la zone fan (variante non représentée).

Dans le mode de réalisation représenté en référence à la figure 1, la partie avant de la figure correspond à l'arrière du boîtier 10, orienté vers l'aval de la turbomachine, tandis que la partie arrière de la figure correspond à l'avant du boîtier 10, orienté vers l'amont. Cette orientation n'est toutefois pas limitative.

Le boîtier 10 comporte une enveloppe 30 pourvue de deux branches (ou bras) 30a et 30b. Une ligne d'engrenages 40a ou 40b est montée dans chacune des branches 30a et 30b (voir figure 2). Les lignes d'engrenages 40a et 40b comportent chacune un pignon respectif 45a ou 45b s'étendant selon un plan Pa ou Pb, ou un plan général parallèle à l'un de ces deux plans Pa et Pb. Il est alors dit que les plans Pa et Pb sont les plans d'orientation générale des lignes d'engrenages 40a et 40b.

Deux équipements 20a et un équipement 20b sont ici montés de part et d'autre du boîtier 10 sur la face supérieure respective de chaque branche 30a et 30b.

Chaque équipement 20a et 20b est alimenté en mouvement rotatif par un arbre dont un pied est disposé dans l'enveloppe 30. Plus précisément, chaque pied est pourvu d'un pignon comme l'un des pignons 45a et 45b. En figure 1, les arbres et les pignons ne sont pas représentés pour une raison de lisibilité.

Les arbres des équipements 20a sont orientés selon un axe AA, l'arbre de l'équipement 20b est orienté selon un axe BB. Les équipements 20a et 20b forment un V d'orientation opposée à un V défini par rapport aux pignons, c'est-à-dire que les axes AA sont orientés selon un angle α différent d'un angle plat, c'est-à-dire différent de 0° ou 180°, par rapport aux axes BB. De manière préférée mais non limitative, cet angle α est compris entre 100° et 150°. En d'autres termes, les plans Pa et Pb d'orientation générale des lignes d'engrenages 40a ou 40b ou de leur(s) pignon(s) 45a ou 45b sont sécants selon un profil en forme de V, c'est-à-dire qu'ils ne sont ni confondus ni parallèles.

Une boîte de renvoi d'angle 25 (en anglais TGB ou Transfer Gearbox) est disposée ici non limitativement à l'avant du boîtier 10. Une extrémité d'un arbre de transfert de l'énergie rotative issue de la turbine est par exemple logée dans la TGB 25.

Un réservoir de lubrifiant 35 est ici disposé entre les lignes d'engrenages 40a et 40b. Dans le mode de réalisation représenté, le réservoir 35 est intégré dans l'enveloppe 30 dans un intervalle central 30c situé entre les branches 30a et 30b.

Le réservoir 35 se situe plus précisément entre les deux branches 30a, 30b, au niveau de la jonction entre leurs deux extrémités les plus rapprochées. En d'autres termes le réservoir 35 se situe globalement à proximité de la pointe du V défini par les équipements 20a et 20b, le creux de ce V étant ouvert en direction de l'axe longitudinal XX de la turbomachine (voir notamment en figure 2).

L'enveloppe 30 peut être fabriquée par fonderie ou par un procédé analogue (par exemple de type fabrication additive, comme par fusion de poudre par laser ou par projection de poudre ou d'autres procédés), ou par usinage dans la masse ou par usinage de parois distinctes et assemblage ultérieur de celles-ci. Le réservoir de lubrifiant 35 peut être non limitativement une cavité prévue dans une pièce plus grande ou un carter distinct, situé dans l'enveloppe 30 ou extérieurement et contre celle-ci.

Lorsque l'enveloppe 30 est fabriquée par fonderie, le réservoir 35 est préférentiellement une cavité ménagée dans le brut de fonderie.

Lorsque l'enveloppe 30 est un carter formé par exemple de parois usinées, le réservoir 35 est préférentiellement un deuxième carter distinct disposé dans l'enveloppe 30.

D'une manière générale, un réservoir de lubrifiant tel que le réservoir 35 ainsi placé entre les équipements 20a et 20b permet de limiter au maximum les longueurs de canalisation d'approvisionnement en lubrifiant et d'en simplifier l'architecture.

En variante, des équipements sont montés dans une zone turbine disposée entre les parois 111E et 112I, par exemple dans la zone 109 en vis-à-vis d'une turbine 105 (figure 3) et/ou le boîtier d'entrainement 10 s'étend lui-même dans cette zone turbine 109.

Le réservoir 35 peut former le réservoir de lubrifiant principal de l'AGB. Le réservoir 35 peut encore former une portion seulement du volume total de réservoirs de lubrifiant prévus pour alimenter l'AGB, voire être une réserve d'huile pour les phases de fonctionnement dégradé.

D'autres variantes sont encore possibles sans sortir du cadre de l'invention qui est définie par les revendications suivantes.

## Revendications

1. Boîtier d'entraînement pour équipements de turbomachine comportant une enveloppe (30) et deux lignes d'engrenages (40a, 40b) disposées en V, l'enveloppe (30) comportant deux branches (30a, 30b) dans chacune desquelles l'une des deux lignes d'engrenages (40a, 40b) est disposée, un réservoir de lubrifiant (35) étant disposé entre les deux lignes d'engrenages (40a, 40b),
**caractérisé en ce que** l'enveloppe (30) est un premier carter, et le réservoir de lubrifiant (35) est un deuxième carter monté dans le premier carter.

2. Boîtier d'entraînement pour équipements de turbomachine, selon la revendication 1, le réservoir de lubrifiant (35) étant intégré dans l'enveloppe (30).

3. Boîtier d'entraînement pour équipements de turbomachine, selon l'une des revendications 1 ou 2, l'enveloppe (30) étant une pièce de fonderie.

4. Boîtier d'entraînement pour équipements de turbomachine, selon l'une des revendications 1 ou 2, l'enveloppe (30) étant une pièce produite par fabrication additive.

5. Boîtier d'entraînement pour équipements de turbomachine, selon l'une des revendications 3 ou 4, le réservoir de lubrifiant (35) étant une cavité ménagée dans l'enveloppe (30).

6. Boîtier d'entraînement pour équipements de turbomachine, selon l'une des revendications 1 à 5, le réservoir de lubrifiant (35) étant un réservoir principal.

7. Boîtier d'entraînement pour équipements de turbomachine, selon l'une des revendications 1 à 5, le réservoir de lubrifiant (35) étant un réservoir auxiliaire.

8. Turbomachine comportant un boîtier d'entraînement pour équipements selon l'une des revendications 1 à 7, le boîtier d'entraînement pour équipements étant disposé dans la zone centrale, située entre une veine primaire et une veine secondaire de la turbomachine.

## Patentansprüche

1. Getriebe für Ausrüstungsteile von Turbotriebwerken, das ein Gehäuse (30) und zwei V-förmig angeordnete Getriebestränge (40a, 40b) aufweist, wobei das Gehäuse (30) zwei Schenkel (30a, 30b) umfasst, in denen jeweils einer der beiden Getriebestränge (40a, 40b) angeordnet ist, wobei ein Schmiermittelbehälter (35) zwischen den beiden Getriebesträngen (40a, 40b) angeordnet ist,
**dadurch gekennzeichnet,**
**dass** das Gehäuse (30) ein erster Kasten ist und der Schmiermittelbehälter (35) ein zweiter Kasten ist, der in dem ersten Kasten sitzt.

2. Getriebe für Ausrüstungsteile von Turbotriebwerken nach Anspruch 1, wobei der Schmiermittelbehälter (35) in das Gehäuse (30) integriert ist.

3. Getriebe für Ausrüstungsteile von Turbotriebwerken nach einem der Ansprüche 1 oder 2, wobei das Gehäuse (30) ein Gussstück ist.

4. Getriebe für Ausrüstungsteile von Turbotriebwerken nach einem der Ansprüche 1 oder 2, wobei das Gehäuse (30) ein Stück ist, das durch zusätzliche Fertigung hergestellt wird.

5. Getriebe für Ausrüstungsteile von Turbotriebwerken nach einem der Ansprüche 3 oder 4, wobei der Schmiermittelbehälter (35) ein Hohlraum ist, der in dem Gehäuse (30) hergestellt wird.

6. Getriebe für Ausrüstungsteile von Turbotriebwerken nach einem der Ansprüche 1 bis 5, wobei der Schmiermittelbehälter (35) ein Hauptbehälter ist.

7. Getriebe für Ausrüstungsteile von Turbotriebwerken nach einem der Ansprüche 1 bis 5, wobei der Schmiermittelbehälter (35) ein Reservebehälter ist.

8. Turbotriebwerk, das ein Getriebe für Ausrüstungsteile nach einem der Ansprüche 1 bis 7 aufweist, wobei das Getriebe für Ausrüstungsteile im zentralen Bereich angeordnet ist, der sich zwischen einer Primärstrombahn und einer Mantelstrombahn des Turbotriebwerks befindet.

## Claims

1. Accessory gearbox for turbomachine equipment comprising a casing (30) and two gear lines (40a, 40b) arranged in a "V" shape, the casing (30) comprising two arms (30a, 30b) in both of which one of the two gear lines (40a, 40b) is arranged, with a lubricant tank (35) being arranged between the two gear lines (40a, 40b), **characterized in that** the casing (30) is a first crankcase, and the lubricant tank (35) is a second crankcase mounted in the first crankcase.

2. Accessory gearbox for turbomachine equipment, according to claim 1, the lubricant tank (35) being integrated into the casing (30).

3. Accessory gearbox for turbomachine equipment, according to one of claims 1 or 2, the casing (30) being a cast part.

4. Accessory gearbox for turbomachine equipment, according to one of claims 1 or 2, the casing (30) being a part produced by additive manufacturing.

5. Accessory gearbox for turbomachine equipment, according to one of claims 3 or 4, the lubricant tank (35) being a cavity arranged in the casing (30).

6. Accessory gearbox for turbomachine equipment, according to one of claims 1 to 5, the lubricant tank (35) being a main tank.

7. Accessory gearbox for turbomachine equipment, according to one of claims 1 to 5, the lubricant tank (35) being an auxiliary tank.

8. Turbomachine comprising an accessory gearbox for equipment according to one of claims 1 to 7, with the accessory gearbox for equipment being arranged in the core zone, located between a primary flow path and a secondary flow path of the turbomachine.
